Europäisches Patentamt

European Patent Office

Office européen des brevets

(11) Publication number: **0 079 151 B1**

# EUROPEAN PATENT SPECIFICATION

(45) Date of publication of patent specification: **02.04.86**

(51) Int. Cl.⁴: **C 04 B 41/88, C 04 B 37/00, C 22 C 13/00, C 23 C 26/00 // C04B37/02**

(21) Application number: **82305606.4**

(22) Date of filing: **21.10.82**

(54) Ceramic, cermet or metal composites.

(30) Priority: **27.10.81 US 315452**
**10.09.82 US 415502**

(43) Date of publication of application:
**18.05.83 Bulletin 83/20**

(45) Publication of the grant of the patent:
**02.04.86 Bulletin 86/14**

(84) Designated Contracting States:
**AT BE CH DE FR GB IT LI LU NL SE**

(56) References cited:
**GB-A-1 447 356**
**US-A-3 747 173**
**US-A-4 106 930**

(73) Proprietor: **ADVANCED TECHNOLOGY INC.**
**117 Cedar Lane**
**Englewood New Jersey 07621 (US)**

(72) Inventor: **Intrader, Joseph, Dr.**
**125 Dermerest Avenue**
**Englewood Cliffs New Jersey 07632 (US)**
Inventor: **Bertoldo, Gene**
**306 W 51 Street**
**New York NY 10019 (US)**

(74) Representative: **Ritter, Stephen David et al**
**Mathys & Squire 10 Fleet Street**
**London EC4Y 1AY (GB)**

Courier Press, Leamington Spa, England.

## Description

This invention relates to ceramic, cermet or metal composites.

Our copending European Patent Application No. 81302535.0 (EP—A—0067252) describes and claims composites of tin, lead, indium, a tin alloy, a lead alloy or an indium alloy, as a component, in combination with a carbide or carbonyl former, as an adherent coating film or layer on a base or substrate of a carbon, diamond, silicon, a carbide, boron nitride, titanium diboride, alumina, zirconia, sapphire or quartz structure which is non-dewettable upon heating.

According to the specification of EP—A—0067252 (page 9, line 23 to page 10, line 2) it is stated that it had been surprisingly found "that the above 'active' metals formed in-situ or as preforms when deposited on many very hard to coat materials such as the recited substrates, form a tightly adhering coating which is believed to be atomically bound to the substrate. Bond strengths of heretofore unknown magnitude have been observed which tends to support the "atomic" bond interpretation of these results".

US—A—4,374,903 (based on US Patent Application Serial No. 268,015) describes further details of the above-described composites. The full text of US Patent Application Serial No. 268,015 was appended to the description of EP—A079151 as Appendix A.

In our above-identified applications, we have disclosed various substrates and alloy combinations found to be especially useful for producing outstandingly adherent coatings of tin, lead, indium, or alloys thereof, in admixture with carbide or carbonyl formers to substrates recited in those previous applications.

It has now been found that nitrides, oxides, arsenides, borides, phosphides, tellurides, titanates, silicides, etc. of metals or metalloids, may be used as such or in their compacted forms, as substrates or base elements. These can be joined with various other substrates employing as a coating, film, layer or interlayer former a tin, lead, indium, or alloys thereof, in an admixture with a carbide or carbonyl former and joining the substrate or base in a carbon monoxide atmosphere with the coating, etc former. This invention also pertains to composites of beryllia, that is coatings for beryllia (i.e. beryllium oxide), with a coating having excellent adhesion to the oxide with properties heretofore unknown or unachieved when coating beryllium oxide. Sandwich composites of beryllia with said coating between beryllia layers or other composites on top of a coating on a beryllia layer are also within the scope of this invention.

The present invention is in effect based on subsequent discoveries made during the utilization and investigation of the various aspects of our previously disclosed inventions and has been found to be especially useful, in a generic sense, to applications to bases of substrates heretofore known for their extreme difficulty for bonding with different materials and substrates.

According to one aspect, the present invention provides a composite comprising at least the following component parts:—

(a) a base or substrate formed of a nitride, arsenide, titanate, silicide, boride, telluride, phosphide or oxide of metal or metalloid, with the proviso that said substrate is not formed from boron nitride, alumina, zirconia, quartz, sapphire or titanium diboride and

(b) an adherent coating, film or layer on said base or substrate comprising (i) 99 to 60% of tin, lead, indium, a tin alloy, a lead alloy or an indium alloy in combination with (ii) 1 to 40% of a metal which is a carbide; or carbonyl former, characterised in that during formation of the bond between the base or substrate and the adherent coating, film or layer components (i) and i) are maintained in the presence of carbon monoxide, whereby said bond formed is substantially void-free.

Specific examples of carbide or carbonyl formers include chromium, titanium, hafnium, zirconium, cobalt, iron, nickel, manganese, rhenium, ruthenium, rhodium, osmium, iridium, vanadium, niobium, tantalum, tungsten or molybdenum, or mixtures of same.

As indicated in EP—A—0067252, the group of carbonyl or carbide formers which are useful because of their availability, are chromium, manganese, molybdenum, vanadium, tungsten, iron, cobalt, or nickel. Other, but cost wise not as advantageous, carbonyl or carbide formers are rhenium, ruthenium, rhodium, osmium and iridium. Besides the above mentioned carbide formers, zirconium, hafnium and tantalum are also mentioned, but cost wise are not desirable because these are very expensive. Because of toxicity, nickel or iron carbonyls are dangerous and extreme caution must be exercised in use, although these function for the alleged purpose and may not necessarily form carbonyls under the process conditions.

Additionally, preforms of tin, lead, indium metals, alloys of tin, lead and indium and a carbide or carbonyl former such as chromium, nickel, vanadium etc, have been obtained, which when cast and shaped, can then be used in shapes such as discrete elements, e.g. shims, foils or leaves placed on or interleaved with the substrate and, upon heat fusing, joined to said substrate to provide a composite for soldering or joining or fusing the composite to other substrates.

As disclosed in our previous application, the combination of the carbide and carbonyl former with tin, lead, indium, or alloys thereof, when the same are properly admixed and then made to join with a substrate in an atmosphere of carbon monoxide, has produced heretofore unknown and completely unforeseen results. This discovery has opened the possibility now to join metals with substrates heretofore most difficult to join with. It has now been found that by practicing the same process on various substrates heretofore incapable of ready production, outstanding good bonds which are essentially void free, have great tenacity and no measurable increase in resistance can be produced in outstanding yields. This is possible with the base substrate and also because the tin, lead, or indium alloy on the base substrate can be further joined with other bases or substrates or metals in various forms, providing heretofore unknown and novel substrates useful in many applications such as in the electronic industry for purposes of heat dissipation, current transmission, and the like, and producing outstandingly contamination-free, substantially entirely void free (upon microscopic examination) joints between these devices. Other devices such as piezoelectric, e.g. barium titanates and lasing devices, such as based on aluminum gallium arsenide, can now be readily joined and fabricated in a facile manner for useful application and utilization at a fraction of the cost previously necessary for the successful bonding of the substrates to electrically conductive materials or bases or heat transmissive yet electrically insulative bases such as beryllium oxide.

In general, the same atmosphere conditions, as well as the same temperature ranges as were described in our previous applications apply, and these are established for the substrate at the necessary conditions. Similarly, the residence time at which proper bonding takes place due to the reducing atmosphere of carbon monoxide is established as necessary, but generally falls within the disclosure found in our previous application. The particular temperature and residence time employed is that most suitable for the particular substrates, and mere routine establishment of the necessary conditions are carried out in any event, as it would be done in any industrial installation in which the practice of our invention would be sought to be applied.

Although carbon monoxide is by far the outstanding reducing agent, it can be admixed with other compatible reducing agents. Similarly, it may be diluted with other gases compatible therewith which do not affect the reaction mechanism or reducing nature of carbon monoxide. After the reducing atmosphere has been established and a proper bond formed such as by the substantial absence of voids, the thorough wetting and tight adherence, as discussed previously, the reducing atmosphere may be appropriately removed and another inert atmosphere substituted therefor to cool the formed composite. In the same manner as the follow-up cooling, the start-up heating may be in an inert atmosphere, although preheating of the substrate and the material can likewise be in a reducing gas such as hydrogen. However, far and away the most effective manner has been the joining of substrate, layers, etc. with the tin, lead, indium and/or alloys thereof and the carbide or carbonyl formers in the presence of carbon monoxide which seems to somehow synergistically interact with the substrate tin, etc. and/or the carbide or carbonyl former.

Although the carbide or carbonyl formers have been used in various forms, it has been most advantageously found that these be of fine particle size, beginning with a colloidal all the way up to 1/8 of an inch (3 mm) in particulate size. These particulates may be dispersed in the tin, etc. metal, such as under conditions conducive thereto by kneading and/or hot forming or like methods; similarly, dispersoids of one in the other in the extremely fine form thereof may be appropriately admixed in a vehicle such as rosin oil or the various Freons which readily evaporate from the dispersion. The dispersion can then be painted on the substrate or applied thereto by silk-screening or printing, depending on the substrate thickness. Thereafter, the material is inserted in the reducing atmosphere as mentioned above under the appropriate conditions. Different patterns may thus be formed on substrates such as conductive paths and the like for forming circuits, etc.

Some of the illustrations of the substrates which have been given in the previous applications can equally well be joined with the heretofore not disclosed substrates in this application. Consequently, the various substrates such as disclosed and claimed herein are now capable of being joined in outstanding and novel combinations useful for the purposes as disclosed herein. Thus, lanthanum boride, $LaB_6$, useful as a very efficient electron emitter used in electron microscopes, can be outstandingly bonded to electrical devices when first coated with tin-vanadium. This substrate may be successfully bonded or coated in an atmosphere of carbon monoxide at approximately 1,000°C with a composition consisting of about 15 to 2% vanadium, balance tin.

The homogeneous admixture of these powders, their easy dispersability in fine form, and their ready application to the substrate lends these combinations for purpose of application to the various other substrates as recited above. For example, beryllium oxide may readily be joined with lanthanum boride as being the other of the two layers or substrates, with the tin, etc. in admixture with carbide or carbonyl former, e.g. vanadium as the interlayer for the two.

Other equally facile methods for forming films, layers, etc. on and/or for joining with various substrates gallium arsenide or aluminum gallium arsenide have been found when employing the tin and carbide or carbonyl former combinations. Some of these are such as chromium-tin, vanadium-tin, molybdenum-tin, tungsten-tin, iron-tin, titanium-tin, tantalum-tin, manganese-tin, nickel-tin, and cobalt-tin. The percentages of the above combinations have been of about 15 to 2% of the carbide or carbonyl former balance tin, with the preferred range being from about 10% to about 15% for the carbide or carbonyl former when joined to the gallium arsenide or aluminum gallium arsenide. Similarly to the above, and especially the tin-vanadium combination, it may be readily used to form adherent coatings, on silicon, silicon nitride, or silicon oxide, and thus form various layer combinations of the three (besides these in turn may be joined to the other previously cited base(s) or substrate(s)). Besides the above recited carbide or carbonyl formers, admixtures of these can be equally useful. For example, adding 10% nickel to chromium, vanadium, molybdenum, and cobalt admixture consisting of 10 parts of cobalt to 90 parts of tin results in an equally outstanding adhesion to substrates such as tungsten carbide in combination with the substrates as disclosed herein.

Further, gallium phosphide which is used at high frequencies such as for light emitting diodes is coated with tin, indium, lead alloy, with the carbide or carbonyl former with 90% tin, 5% vanadium, and 5% nickel in an atmosphere of carbon monoxide at 900°C. An outstandingly adhesive bond was formed. In a similar manner, using the same proportions as above for tin, etc. with vanadium and nickel, zirconium orthosilicate by itself and in admixture with magnesium silicates and the two foregoing further in admixture with aluminum silicate have been successfully coated at the same conditions in carbon monoxide with outstanding adhesion characteristics.

In the same manner as discussed above, the various titanates, e.g. barium titanate; silicon nitrides; oxides, e.g. boron oxides; arsenides, silicides, tellurides and the like, have been joined with tin containing carbide or carbonyl formers to substrates such as carbon, e.g. graphite; metals, e.g. stainless steel; oxides, e.g. beryllium oxide, etc.

Based on the process, the composites have excellent mechanical and/or electrical and/or thermal conductivity properties. There is no need to use noble metals, no sputtering is needed, and extremely sound and strong joints are being formed. Temperatures can be adjusted of the various substrates such that elevated temperature requirements can be met heretofore impossible to meet, i.e. in some tailor-made cases i.e. such as when joining to stainless steel, where heretofore these temperature limits could not be achieved.

In general, it has been found that the present process is applicable to all ceramic type of materials, including mixtures of ceramics and metals known as cermets, and the oxides, nitrides, arsenides, titanates, tellurides, silicides, borides, phosphides of the metals or metalloids. These have been found to be especially useful as the substrate materials when these, in powder form, have been isostatically compacted in a very strong mass such as under extremely high pressures (in a can of powder and when subjected to a hot isostatic pressure as it is well known in the art).

These substrate or base materials can also be distributed as powders in forms giving fine dispersion with each other or other like forms, either compatible or incompatible but nevertheless strong, and then isostatically compacted to fully dense forms of outstanding properties. Thus, these can be ceramics or cermets (ceramic metal combinations) which thereafter, by means of the tin, etc. and carbide or carbonyl former, may be joined to other metals, ceramics, cermets, and the like. When thereafter so joined as described herein with the tin, lead, indium or alloy forms thereof in admixture with the carbide and carbonyl formers, these substrates have strong bonds with each other or with other metals and cermets and are employed for the various purposes listed above.

In connection with the aspect of the invention concerned with composites of beryllia, heretofore beryllium oxide was thought to be an oxide that could not be easily coated, and, in fact, great difficulties have been experienced when attempts have been made to coat beryllium oxide. As far as it is known to the applicants, no particular method has been successful. Although sputtering has been used, it is a three-step operation needing precious metals. When the sputtering process is used, holes cannot be filled. Typically, the test for evaluating acceptability has been penetration ability of the coating, its angle of contact, as well as dewetting upon heat cycling. Still further, for beryllium the capability of a coating for wetting a hole in a beryllium substrate has also been used as a test.

In most instances, these tests have shown that coatings with zero contact angles, wettability, and penetration through holes have been impossible to achieve by any reasonable means.

We have now found that when pressed tin metal powder, which contains vanadium metal powder in an amount from 1/2% to 10%, but typically from 1/2 to 6% and preferably from 1/2 to 4% by weight of vanadium, performs outstandingly well when the powder is first compacted, such as by hot rolling tin with the admixture of vanadium and forming preforms or pressed shapes. These preforms or pressed shapes, when placed on beryllium oxide substrate and heated to about 1000°C. in an atmosphere of carbon monoxide, will cause outstanding wetting of the beryllium oxide.

These preforms, when thus heated, will cause the coating to flow and capillarily penetrate even the tiniest holes and wet the walls thereof, even flowing through to the underside of the substrate through these holes.

When the same attempt was made to coat beryllium oxide in a hydrogen atmosphere, the end result was unsuccessful in terms of zero contact angle, wettability, and hole penetration. Moreover, further experiments have now shown that various combinations of metals with tin powder give various end results. It thus appears that almost perfect results are obtained with tin vanadium powder compacts in a ratio of tin to vanadium being from 99 1/2% tin to 1/2% vanadium to 96% tin to 4% vanadium. Other results have been obtained with other combinations and these will be set out further below.

Based on the above achievement, beryllium oxide can now be employed for applications heretofore not possible because of its repellancy of coating compositions, especially metal coating compositions. Thus, for example, beryllium oxide is an excellent thermal conductor and a heat sink to which various electrical components could well be attached to provide an excellent means for dissipating heat. Heat conductivity of beryllium oxide is about 57% of that of copper and 106% of that of aluminium.

Turning now to the specific preparation of the preforms composed of the powders of tin and vanadium, as it can well be understood, tin and tin alloys are suitable for forming composites according to the present invention. By tin alloys are meant those alloys in which the tin is more than 30% but typically 50%, by weight. Lead is a metal for alloying with tin and so is bismuth.

As the other component of the combination, metals such as chromium, molybdenum, vanadium, and mixtures thereof are intended as a group of preferred metals. Of the various tin alloys, tin and lead alloys, such as having tin from 62% and the balance lead, are preferred. On the basis of a hundred parts per tin alloy, the addition of vanadium and the other active materials are in an amount such that the above percentage compositions are observed, i.e. up to 10%.

The metallurgically active metals or alloys thereof are occurring, it is believed, in the carbon monoxide atmosphere, and these form the strongly adhesive bond. These metals are first preformed by compacting. This can be done, for example, by rolling or die-compacting, but preferably by rolling a thin sheet of the "active" metal powder composition. Powders are generally used in a fairly wide distribution range and powder sizes are not restrictive. These sizes can vary from colloidal to particulates of up to two or three millimeters.

Of course, an admixture of the metals when merely placed on top of the beryllium oxide element can also be used to form the coating, but it has been found much more convenient to have the active metal in a form such as a preform of the shapes that are desired, such as shims, foils, and stamped out forms, e.g. to match the electronic component to be mounted on the beryllia base.

It has also been found that, due to the excellent adhesive characteristics, beryllium oxide can now be bonded to other metals and other substrates, thus further improving the mechanical or chemical properties of the composition, such as for heat dissipation purposes or for supporting beryllium oxide on a metal substrate to overcome the brittleness properties of beryllium oxide, e.g. for ablative purposes.

Again, as mentioned in the above-identified applications, the various sandwich and composite formations are within the contemplation of the invention herein. The various sandwiches are those as previously disclosed, i.e. those compositions which readily alloy with tin and thus form the desired components. The initial coating formation and the alloying, in order to achieve the composites with the coatings on beryllium oxide, must take place in a carbon monoxide atmosphere which is critical to the obtention of the end product. If the same heating were to take place in a hydrogen atmosphere or other inert gas atmosphere, in absence of carbon monoxide the formed bond appears to be inadequate. Hence, an element of the invention is the critical presence of carbon monoxide which must be maintained during the bonding reaction so as to form the heretofore unobtainable and highly desirable coating compositions. Generally, a 100% carbon monoxide atmosphere is best maintained, although lesser amounts of carbon monoxide will work.

If a new and different bond is sought to be formed with a different layer of the same substrate, then the compositions must be joined together with another active shim or shape placed on the coated, other substrate, and then same joined together. The two substrates are then pressed together, all as part of the repeated operation.

As previously noted in our other applications, copper-tin is one of the most readily used means to form a bronze interlayer because copper soaks up tin. This reaction raises the melting point of the preform allowing, during the course of joining, or subsequently, by placing a copper foil on the coating, the necessary shapes to form.

Beryllium oxide is readily available in the trade in various forms and shapes thereof, such as from Brush-Wellman Corporation, Cleveland, Ohio, and National Beryllia, Haskell, New Jersey.

The following examples are included herein to illustrate the various aspects of the invention as well as the preferred embodiment. These examples are merely illustrations and are not intended to limit the broader scope of the invention.

TABLE I

| Example | Tin alloy combination | Appearance of coating |
|---|---|---|
| 1 | Sn Cr Mo (4gr)* | Fair wetting and good bonding |
| 2 | Sn Cr V (1gr)* | Wetting is like water flowing with a solid bond |
| 3 | Sn Cr V (2gr)* | Even better than #2 |
| 4 | Sn Cr V (4gr)* | Almost perfect complete spreading |
| 5 | Sn V (1/2gr) | Perfect spread and perfect bonding |
| 6 | Sn V (1gr) | Same as #5 |
| 7 | Sn V (2gr) | Same as #5 |
| 8 | Sn V (4gr) | Same as #5 |
| 9 | Sn (88gr) Bi (12gr) Cr (8gr) V (4gr) | Similar to #2 with smoother finish |
| 10 | Sn (62gr) Pb (38gr) Cr (8gr) V (8gr) | Similar to #9 |
| 11 | Sn (98gr) Pb (2gr) Cr (8gr) V (4gr) | Better than #10 in terms of additional flow |

*92gr tin, 8gr chromium, to which is added the indicated metal, by weight, in grams.

Each of the examples was carried out by depositing a preform compact of the powder components recited above in Table I of the defined proportions on a beryllia substrate, and then introducing the same into a furnace which is held at a temperature from 800°C. to 1000°C. and which contains substantially only a carbon monoxide atmosphere. After the reaction the carbon monoxide atmosphere may be vented and oxidized and cooling may take place in inert atmosphere.

Based on the above Table, it is evident that, as presently contemplated, the preferred embodiment consists of the combination of tin with vanadium. In the indicated order of achievement, a perfect spread and perfect bonding means the deposit shows a zero to negative angle of bonding, and cannot be dewetted. Moreover, an aperture in the beryllia substrate is penetrated readily by the active alloy with the alloy strongly adhering to the walls of the aperture, and even spreading on the underside of the substrate. The aperture is about 1/16 inch (0.16 cm) in diameter.

**Claims**

1. A composite comprising at least the following component parts

(a) a base or substrate formed of a nitride, arsenide, titanate, silicide, boride, telluride, phosphide or oxide of a metal or metalloid, with the proviso that said substrate is not formed from boron nitride, alumina, zirconia, quartz, sapphire or titanium diboride, and

(b) an adherent coating, film or layer on said base or substrate comprising (i) 99 to 60% of tin, lead, indium, a tin alloy, a lead alloy or an indium alloy in combination with (ii) 1 to 40% of a metal which is carbide- or carbonyl former,

characterised in that during formation of the bond between the base or substrate and the adherent coating, film or layer components (i) and (ii) are maintained in the presence of carbon monoxide, whereby said bond formed is substantially void-free.

2. A composite as defined in Claim 1, wherein the carbide or carbonyl former is chromium, titanium, hafnium, zirconium, cobalt, iron, nickel, manganese, rhenium, ruthenium, rhodium, osmium, iridium, vanadium, niobium, tantalum, tungsten or molybdenum, or mixtures of same.

3. A composite as defined in Claim 1 or Claim 2 wherein the substrate is gallium arsenide or gallium phosphide.

4. A composite as defined in Claim 1 or Claim 2 wherein the substrate is aluminium gallium arsenide.

5. A composite as defined in Claim 1 or Claim 2 wherein the substrate is lanthanum boride, represented as $LaB_6$.

6. A composite as defined in Claim 1 or Claim 2 wherein the substrate is barium titanate,

6

zirconium ortho silicate, magnesium silicate or aluminium silicate or mixtures thereof.

7. A composite as defined in Claim 1 or Claim 2 wherein the substrate is silicon nitride.

8. A composite as defined in Claim 1 or Claim 2 wherein the substrate is an arsenide.

9. A composite as defined in Claim 1 or Claim 2 wherein the substrate is a compacted oxide, nitride, boride, arsenide, telluride, phosphide, silicide, titanate or a mixture thereof, of metals, metalloids or mixtures of the two.

10. A composite as defined in any preceding claim, wherein the carbide or carbonyl former is from 15% to 2% chromium, vanadium, molybdenum, tungsten, iron, titanium, tantalum, manganese, nickel or cobalt or mixtures of the foregoing, balance tin or indium or alloys thereof.

11. A composite as defined in any of Claims 1 to 9 wherein the carbide or carbonyl former is iron, the adherent comprising iron and tin in a ratio of about 5 to 95.

12. A composite as defined in any of Claims 1 to 9 wherein the carbide former is chromium.

13. A composite as defined in any of Claims 1 to 9 wherein the carbide former is vanadium.

14. A composite as defined in any of Claims 1 to 9 wherein the carbonyl former is nickel in admixture with vanadium.

15. A composite as defined in any preceding claim wherein component (b) (i) is a tin-lead alloy.

16. A composite as defined in any preceding claim, wherein said alloy is an indium alloy.

17. A composite as defined in Claim 16, wherein said indium alloy is admixed with vanadium.

18. A composite as defined in any preceding claim further comprising an overlay on said coating, film or layer comprising one of the substrate materials, or a metal alloyable with said coating, film or layer.

19. A composite as defined in Claim 18, wherein the overlay is copper on a tin-chromium-arsenide composite.

20. The composite as defined in Claim 18, wherein the overlay is an arsenide.

21. A composite as defined in Claim 18, wherein said base substrate is gallaium arsenide, and the coating is of tin and vanadium and the overlay is beryllium oxide.

22. A composite as defined in Claim 18, wherein said base structure is lanthanum boride and said overlay is beryllium oxide.

23. A composite as defined in Claim 18, wherein the base or substrate comprises beryllia on which there is a coating, layer or film of tin-vanadium, and an overlay of gallium arsenide or aluminium gallium arsenide.

24. A method for preparing a coating, film or layer as defined in Claim 1, comprising the steps of: admixing a particulate of tin, lead, indium, or alloys of each of the foregoing, with a finely divided particulate of a carbide former in the form of their metals, to form an admixture in a vehicle suitable therefore to form a dispersoid for dispersion on said base or substrate, reacting said admixture up to and at the melting point of said admixture, in the presence of carbon monoxide, cooling said admixture in the presence of said carbon monoxide atmosphere or carbon monoxide in an admixture with an inert gas or cooling in an inert atmosphere of hydrogen or hydrogen and nitrogen, and recovering said admixture as an "active" alloy.

25. A method as defined in Claim 27, wherein the particulates are in an admixture in a size range from colloidal, 350 mesh (U.S.) to 1/8 inch (0.045—3 mm).

26. A method as defined in Claim 25, wherein the vehicle is a rosin, oil, a Freon composition or a like vehicle and the dispersion is applied by silk screening, painting, spraying or printing on said substrate or base.

27. A composite according to Claim 1 of beryllium oxide and tin or tin alloys, wherein tin or tin alloy comprises as an additive a carbide or carbonyl former, said composite having the tin or tin alloy as a highly adherent coating, film, or layer on a beryllium oxide base or substrate, said coating characterized by being non-dewettable upon heat cycling, having a zero or negative angle of contact and having penetrability in interstices or through an aperture in said substrate.

28. A composite as defined in Claim 27, wherein the carbide or carbonyl former is chromium, titanium, cobalt, iron, nickel, manganese, vanadium, tantalum, tungsten, or molybdenum or mixtures of same.

29. A composite as defined in Claim 28, wherein the carbonyl or carbide former is vanadium.

30. A composite as defined in Claim 28, wherein the carbide or carbonyl former is chromium.

31. A composite as defined in Claim 28, wherein the carbide or carbonyl former is a mixture of chromium and vanadium.

32. A composite as defined in any of Claims 27 to 31, wherein tin alloy is an alloy of tin and lead.

33. A composite as defined in Claim 32, wherein the tin alloy is a mixture of 62% tin and 38% lead.

34. A composite as defined in Claim 27, wherein the additive is vanadium in an amount from 1/2 grams to 10 grams per 100 grams of tin or tin alloy.

35. A composite as defined in Claim 34, wherein the amount of vanadium is from 1/2 grams to 4 grams per 100 grams of tin or tin alloy.

36. A composite as defined in any one of Claims 27 to 31, wherein the tin alloy is an alloy of tin and bismuth.

**Patentansprüche**

1. Zusammensetzung, welche wenigstens die folgenden Bestandteile enthält:

(a) ein Basismaterial oder ein Substrat, bestehend aus einem Nitrid, Arsenid, Titanat, Silicid, Borid, Tellurid, Phosphid oder Oxid eines Metalles oder Metalloides, mit der Maßgabe, daß das Substrat nicht aus Bornitrid, Aluminiumoxid, Zirkoniumoxid, Quarz, Saphir oder Titandiborid besteht, und

(b) einen anhaftenden Überzug, Film oder Beschichtung auf dem Basismaterial oder Substrat, welche(r) (i) 99 bis 60% Zinn, Blei, einer Zinnlegierung, einer Bleilegierung oder einer Indiumlegierung in Verbindung mit (ii) 1 bis 40% eines Metalles, welches ein Carbid- oder Carbonylbildner ist, enthält,

dadurch gekennzeichnet, daß während der Bildung der Bindung zwischen dem Basismaterial oder Substrat und dem anhaftenden Überzug, Film oder der Beschichtung die Komponenten (i) und (ii) in Gegenwart von Kohlenmonoxid gehalten werden, wodurch die gebildete Bindung im wesentlichen lückenlos ist.

2. Zusammensetzung nach Anspruch 1, worin der Carbid- oder Carbonylbildner Chrom, Titan, Hafnium, Zirkonium, Kobalt, Eisen, Nickel, Mangan, Rhenium, Ruthenium, Rhodium, Osmium, Iridium, Vanadium, Niob, Tantal, Wolfram oder Molybdän oder ein Gemisch derselben ist.

3. Zusammensetzung nach Anspruch 1 oder 2, worin das Substrat Galliumarsenid oder Galliumphosphid ist.

4. Zusammensetzung nach Anspruch 1 oder 2, worin das Substrat Aluminiumgalliumarsenid ist.

5. Zusammensetzung nach Anspruch 1 oder 2, worin das Substrat Lanthanborid, dargestellt als $LaB_6$, ist.

6. Zusammensetzung nach Anspruch 1 oder 2, worin das Substrat Bariumtitanat, Zirkoniumorthosilikat, Magnesiumsilikat oder Aluminiumsilikat oder ein Gemisch davon ist.

7. Zusammensetzung nach Anspruch 1 oder 2, worin das Substrat Siliziumnitrid ist.

8. Zusammensetzung nach Anspruch 1 oder 2, worin das Substrat ein Arsenid ist.

9. Zusammensetzung nach Anspruch 1 oder 2, worin das Substrat ein verpreßtes Oxid, Nitrid, Borid, Arsenid, Tellurid, Phosphid, Silizid, Titanat oder ein Gemisch davon von Metallen, Metalloiden oder Gemischen der beiden ist.

10. Zusammensetzung nach einem der vorhergehenden Ansprüche, worin der Carbid- oder Carbonylbildner 15% bis 2% Chrom, Vanadium, Molybdän, Wolfram, Eisen, Titan, Tantal, Mangan, Nickel oder Kobalt oder ein Gemisch derselben und der Rest Zinn oder Indium oder eine Legierung davon ist.

11. Zusammensetzung nach einem der Ansprüche 1 bis 9, worin der Carbid- oder Carbonylbildner Eisen ist, wobei der Überzug Eisen und Zinn in einem Verhältnis von etwa 5 bis 95 enthält.

12. Zusammensetzung nach einem der Ansprüche 1 bis 9, worin der Carbidbildner Chrom ist.

13. Zusammensetzung nach einem der Ansprüche 1 bis 9, worin der Carbidbildner Vanadium ist.

14. Zusammensetzung nach einem der Ansprüche 1 bis 9, worin der Carbonylbildner Nickel in Kombination mit Vanadium ist.

15. Zusammensetzung nach einem der vorhergehenden Ansprüche, worin Komponente (b) (i) eine Zinn-Blei-Legierung ist.

16. Zusammensetzung nach einem der vorhergehenden Ansprüche, worin die Legierung eine Indiumlegierung ist.

17. Zusammensetzung nach Anspruch 16, worin die Indiumlegierung mit Vanadium kombiniert ist.

18. Zusammensetzung nach einem der vorhergehenden Ansprüche, welche über dem Überzug, deum Film oder der Schicht eine weitere Beschichtung aufweist, welche eines der Substratmaterialien oder ein mit dem Überzug, Film oder der Schicht legierbares Metall enthält.

19. Zusammensetzung nach Anspruch 18, worin die Beschichtung Kupfer auf einer Zinn-Chrom-Arsenid-Zusammensetzung ist.

20. Zusammensetzung nach Anspruch 18, worin die Beschichtung ein Arsenid ist.

21. Zusammensetzung nach Anspruch 18, worin das Basissubstrat Galliumarsenid ist und der Überzug aus Zinn und Vanadium und die Beschichtung aus Berylliumoxid besteht.

22. Zusammensetzung nach Anspruch 18, worin die Basisstruktur Lanthanborid und die Beschichtung Berylliumoxid ist.

23. Zusammensetzung nach Anspruch 18, worin das Basismaterial oder das Substrat Berylliumoxid enthält, auf welchem ein Überzug, eine Schicht oder ein Film aus Zinn-Vanadium und eine Beschichtung aus Galliumarsenid oder Aluminiumgalliumarsenid ist.

24. Verfahren zur Herstellung eines Überzuges, Films oder einer Schicht nach Anspruch 1, welche die Schritte des Vermengens von teilchenförmigem Zinn, Blei, Indium oder Legierungen von jedem derselben mit feinverteilten Partikeln eines Carbidbildners in Form ihrer Metalle zu einem Gemenge in einem zur Bildung eines Dispersoides zur Dispersion auf dem Basismaterial oder Substrat geeigneten Vehikel, Umsetzen des Gemenges bis zu und beim Schmelzpunkt des Gemenges in Gegenwart von Kohlenmonoxid, Abkühlen des Gemenges in Gegenwart dieser Kohlenmonoxidatmosphäre oder Kohlenmonoxid im Gemisch mit einem inerten Gas oder Kühlen in einer inerten Atmosphäre von Wasserstoff oder Wasserstoff und Stickstoff und Gewinnen dieses Gemenges als "aktive" Legierung umfaßt.

25. Verfahren nach Anspruch 27, worin die Teilchen in einem Gemenge in einer Größenordnung von kolloidal, 350 mesh (U.S.) bis 1/8 inch (0.045 bis 3 mm) vorkommen.

26. Verfahren nach Anspruch 25, worin das Vehikel ein Harz, Öl, eine Freonzusammensetzung oder ein ähnliches Vehikel ist und die Dispersion durch Siebdruck, Aufmalen, Aufsprühen oder Aufdrucken auf das Substrat oder Basismaterial aufgebracht wird.

27. Zusammensetzung nach Anspruch 1 aus Berylliumoxid und Zinn oder Zinnlegierungen, worin das Zinn oder die Zinnlegierung als Zusatz einen Carbid- oder Carbonylbildner enthält, wobei die Zusammensetzung das Zinn oder die Zinnlegierung als stark anhaftenden Überzug, Film oder Schicht auf einem Basismaterial oder Substrat aus Berylliumoxid hat und der Überzug dadurch gekennzeichnet ist, daß er bei wiederholtem Erhitzen nicht entnetzbar ist, einen negativen Kontaktwinkel oder einen Kontaktwinkel gleich Null hat und Durchdringungsvermögen in Zwischenräume oder durch eine Öffnung in das Substrat aufweist.

28. Zusammensetzung nach Anspruch 27, worin der Carbid- oder Carbonylbildner Chrom, Titan, Kobalt, Eisen, Nickel, Mangan, Vanadium, Tantal, Wolfram oder Molybdän oder ein Gemisch derselben ist.

29. Zusammensetzung nach Anspruch 28, worin der Carbonyl- oder Carbidbildner Vanadium ist.

30. Zusammensetzung nach Anspruch 28, worin der Carbid- oder Carbonylbildner Chrom ist.

31. Zusammensetzung nach Anspruch 28, worin der Carbid- oder Carbonylbildner ein Gemisch aus Chrom oder Vanadium ist.

32. Zusammensetzung nach einem der Ansprüche 27 bis 31, worin die Zinnlegierung eine Legierung aus Zinn und Blei ist.

33. Zusammensetzung nach Anspruch 32, worin die Zinnlegierung ein Gemisch aus 62% Zinn und 38% Blei ist.

34. Zusammensetzung nach Anspruch 27, worin der Zusatz Vanadium in einer Menge von 1/2 Gramm bis 10 Gramm je 100 Gramm Zinn oder Zinnlegierung ist.

35. Zusammensetzung nach Anspruch 34, worin die Menge an Vanadium 1/2 Gramm bis 4 Gramm je 100 Gramm Zinn oder Zinnlegierung ist.

36. Zusammensetzung nach einem der Ansprüche 27 bis 31, worin die Zinnlegierung eine Legierung aus Zinn und Wismuth ist.

**Revendications**

1. Matériau composite comprenant au moins les parties constituantes suivantes:

(a) une base ou support, formé d'un nitrure, arséniure, titanate, siliciure, borure, tellurure, phosphur ou oxyde, d'un métal ou d'un métalloïde, avec la condition que le support en question ne soit pas formé à partir de nitrure de bore, d'alumine, de zircone, de quartz, de saphir ou de diborure de titane, et

(b) une couche, pellicule ou revêtement adhérent, sur ladite base ou support, comprenant (i) 99 à 60% d'étain, de plomb, d'indium, d'un alliage d'étain, d'un alliage de plomb ou d'un alliage d'indium, en combinaison avec (ii) 1 à 40% d'un métal qui est un carburogène ou un carbonylogène,

caractérisé en ce qu'au cours de la formation de la liaison entre la base ou le support et la couche, pellicule ou revêtement adhérent, les composants (i) et (ii) sont maintenus en présence de monoxyde de carbone, si bien que ladite liaison formée est sensiblement exempte ou dépourvue de vides.

2. Matériau composite suivant la revendication 1, caractérisé en ce que le carburogène ou le carbonylogène est le chrome, le titane, l'hafnium, le zirconium, le cobalt, le fer, le nickel, le manganèse, le rhénium, le ruthénium, le rhodium, l'osmium, l'iridium, le vanadium, le niobium, le tantale, le tungstène ou le molybdène, ou des mélanges de ces éléments.

3. Matériau composite suivant la revendication 1 ou la revendication 2, caractérisé en ce que le support est constitué d'arséniure de gallium ou de phosphure de gallium.

4. Matériau composite suivant la revendication 1 ou la revendication 2, caractérisé en ce que le support est constitué d'arséniure d'aluminiumgallium.

5. Matériau composite suivant la revendication 1 ou la revendication 2, caractérisé en ce que le support est constitué de borure de lanthane représenté par la formule $LaB_6$.

6. Matériau composite suivant la revendication 1 ou la revendication 2, caractérisé en ce que le support est constitué de titanate de baryum, d'orthosilicate de zirconium, de silicate de magnésium ou de silicate d'aluminium et leurs mélanges.

7. Matériau composite suivant la revendication 1 ou la revendication 2, caractérisé en ce que le support est constitué de nitrure de silicium.

8. Matériau composite suivant la revendication 1 ou la revendication 2, caractérisé en ce que le support est constitué d'un arséniure.

9. Matériau composite suivant la revendication 1 ou la revendication 2, caractérisé en ce que le support est constitué d'un titanate, siliciure, phosphure, tellurure, arséniure, borure, nitrure, oxyde, compacté, ou d'un mélange de ceux-ci, de métaux, de métalloïdes ou de mélanges de ces deux éléments.

10. Matériau composite suivant l'une quelconques des revendications précédentes, caractérisé en ce que le carburogène ou le carbonylogène est constitué de 15% à 2% de chrome, de vanadium, de molybdène, de tungstène, de fer, de titane, de tantale, de manganèse, de nickel ou de cobalt ou de mélanges des éléments précités, le reste étant constitué d'étain ou d'indium ou leurs alliages.

11. Matériau composite suivant l'une quelconque des revendications 1 à 9, caractérisé en ce que le carburogène ou le carbonylogène est le fer, l'adhérant comprenant du fer et de l'étain en un rapport d'environ 5 à 95.

12. Matériau composite suivant l'une quelconque des revendications 1 à 9, caractérisé en ce que le carburogène est le chrome.

13. Matériau composite suivant l'une quelconque des revendications 1 à 9, caractérisé en ce que le carburogène est le vanadium.

14. Matériau composite suivant l'une quelconque des revendications 1 à 9, caractérisé en ce que le carbonylogène est le nickel en mélange à du vanadium.

15. Matériau composite suivant l'une quelconque des revendications précédentes, caractérisé en ce que le constituant (b) (i) est un alliage d'étain et de plomb.

16. Matériau composite suivant l'une quelconque des revendications précédentes, caractérisé en ce que l'alliage est un alliage d'indium.

17. Matériau composite suivant la revendication 16, caractérisé en ce que ledit alliage d'indium est mélangé à du vanadium.

18. Matériau composite suivant l'une quelconque des revendications précédentes, caractérisé en ce qu'il comprend également un recouvrement sur ledit revêtement, pellicule ou couche, comprenant l'une des matières de support, ou un métal alliable avec ledit revêtement, pellicule ou couche.

19. Matériau composite suivant la revendication 18, caractérisé en ce que le recouvrement est constitué de cuivre sur un produit composite d'arséniure-chrome-étain.

20. Matériau composite suivant la revendication 18, caractérisé en ce que le recouvrement est constitué d'un arséniure.

21. Matériau composite suivant la revendication 18, caractérisé en ce que le support de base est de l'arséniure de gallium et le revêtement est constitué d'étain et de vanadium et le recouvrement est constitué d'oxyde de béryllium.

22. Matériau composite suivant la revendication 18, caractérisé en ce que ladite structure de base est constituée de borure de lanthane et ledit recouvrement est constitué d'oxyde de béryllium.

23. Matériau composite suivant la revendication 18, caractérisé en ce que la base base ou le support se compose de glucine sur laquelle se trouve un revêtement, une couche ou une pellicule d'étain-vanadium, et un recouvrement d'arséniure de gallium ou d'arséniure d'aluminium-gallium.

24. Procédé de préparation d'un revêtement, pellicule ou couche suivant la revendication 1, caractérisé en ce qu'il comprend les étapes consistant à: mélanger un produit particulaire d'étain, de plomb, d'indium ou d'alliages de chacun des éléments précités, à un produit particulaire finement divisé d'un carburogène sous la forme de leurs métaux, de manière à former un mélange dans un véhicule approprié à cette fin, afin d'obtenir un dispersoïde pour la dispersion sur ladite base ou ledit support; faire réagir ledit mélange jusqu'à et au point de fusion dudit mélange, en présence de monoxyde de carbone; refroidir ledit mélange en présence de ladite atmosphère de monoxyde de carbone ou de monoxyde de carbone en mélange à un gaz inerte, ou refroidir ledit mélange en une atmosphère inerte d'hydrogène ou d'hydrogène et d'azote; et récupérer ledit mélange sous forme d'un alliage "actif".

25. Procédé suivant la revendication 24, caractérisé en ce que les produits particulaires sont en mélange dans une gamme granulométrique s'étendant de l'état colloïdal (0,045 mm) à 3 mm.

26. Procédé suivant la revendication 25, caractérisé en ce que le véhicule est une colophane, une huile, une composition de Fréon ou un véhicule analogue et la dispersion s'applique par sérigraphie, peinture, pulvérisation ou impression sur le support ou la base.

27. Matériau composite suivant la revendication 1, d'oxyde de béryllium et d'étain ou d'alliages d'étain, caractérisé en ce que l'étain ou l'alliage d'étain comprend un carburogène ou un carbonylogène à titre d'additif, ledit matériau composite possédant l'étain ou l'alliage d'étain sous la forme de revêtement, de pellicule ou de couche qui adhère fortement à un support ou une base d'oxyde de béryllium, ledit revêtement étant caractérisé par le fait qu'il n'est pas démouillable par des cycles thermiques, qu'il possède un angle de contact zéro à négatif et qu'il posède le pouvoir de pénétrer dans des interstices ou à travers une ouverture que présente le support en question.

28. Matériau composite suivant la revendication 27, caractérisé en ce que le carburogène ou le carbonylogène est le chrome, le titane, le cobalt, le fer, le nickel, le manganèse, le vanadium, le tantale, le tungstène ou le molybdène ou des mélanges de ces éléments.

29. Matériau composite suivant la revendication 28, caractérisé en ce que le carbonylogène ou le carburogène est le vanadium.

30. Matériau composite suivant la revendication 28, caractérisé en ce que le carburogène ou le carbonylogène est le chrome.

31. Matériau composite suivant la revendication 28, caractérisé en ce que le carburogène ou le carbonylogène est un mélange de chrome et de vanadium.

32. Matériau composite suivant l'une quelconque des revendications 27 à 31, caractérisé en ce que l'alliage d'étain est un alliage d'étain et de plomb.

33. Matériau composite suivant la revendication 32, caractérisé en ce que l'alliage d'étain est un mélange de 62% d'étain et de 38% de plomb.

34. Matériau composite suivant la revendication 27, caractérisé en ce que l'additif est du vanadium en une quantité variant de 0,5 gramme à 10 grammes par 100 grammes d'étain ou d'alliage d'étain.

35. Matériau composite suivant la revendication 34, caractérisé en ce que la quantité de vanadium varie de 0,5 gramme à 4 grammes par 100 grammes d'étain ou d'alliage d'étain.

36. Matériau composite suivant l'une quelconque des revendications 27 à 31, caractérisé en ce que l'alliage d'étain est un alliage d'étain et de bismuth.